# EUROPÄISCHE PATENTANMELDUNG

(11) **EP 1 832 758 A2**
(43) Veröffentlichungstag der Anmeldung: **12.09.2007**
(21) Anmeldenummer: 07004169.4
(22) Anmeldetag: 28.02.2007
(51) Int. Cl.: F15B 15/28

(54) **Positionsmeßsystem für Hydraulikzylinder**

(30) Priorität: 08.03.2006 DE 102006010780
(71) Anmelder: Liebherr-France SAS, 68005 Colmar Cedex (FR)
(72) Erfinder: Kossmann, Gerhard, 79367 Weisweil (DE)
(74) Vertreter: Laufhütte, Dieter

(57) **Zusammenfassung**

Die Erfindung betrifft ein Positionsmeßsystem für einen Hydraulikzylinder, welches mindestens einen Sensor (30,40), einen Magneten (20) und eine Kolbenstange (10) mit einem metallischen Kern (13) hoher magnetischer Suszeptivilität und mit einer Rillenstruktur (11) in im wesentlichen axialer Richtung umfasst, wobei die Rillenstruktur (11) mit einem Metall aufgefüllt ist, welches eine geringere magnetische Suszeptivilität aufweist als der Kern (13), so dass der Sensor (30,40) ein von der Rillenstruktur (11) verändertes Magnetfeld des Magneten (20) mißt und damit sowohl die relative als auch die absolute Position der Kolbenstange (10) bestimmen kann.

## Beschreibung

Die vorliegende Erfindung betrifft ein Positionsmeßsystem für Hydraulikzylinder, bei dem mindestens ein Sensor zur Erfassung von Magnetfeldern ein an einer Kolbenstange des Hydraulikzylinders angebrachtes Muster erkennt und so die Kolbenposition bestimmt.

Positionsmeßsysteme für Hydraulikzylinder kommen überall dort zum Einsatz, wo die Steuerung oder Regelung des Hubweges eine genaue Kenntnis der Kolbenposition nötig macht.

Aus EP 0 618 373 B1 ist ein Positionsmeßsystem bekannt, bei welchem die Kolbenstange mit einer Rillenstruktur versehen wird und diese Struktur magnetisch abgetastet wird. Dabei werden sehr tiefe Strukturen verwendet, welche mit einer Keramikbeschichtung aufgefüllt sind. Solche Keramikbeschichtungen sind zwar sehr hart, haben jedoch den Nachteil, dass die scharfkantigen Keramikkörner das Dichtsystem des Hydraulikzylinders abrasiv schädigen. Damit ist ein System mit Keramikbeschichtung nicht für Anwendungen mit vielen Zylinderhüben geeignet und in seiner Lebensdauer begrenzt.

Aufgabe der vorliegenden Erfindung ist es daher, ein Positionsmeßsystem für Hydraulikzylinder zur Verfügung zu stellen, bei welchem verbesserte Oberflächeneigenschaften der Kolbenstange einen niedrigeren Verschleiß und damit eine höhere Lebensdauer des Systems ermöglichen.

Erfindungsgemäß wird diese Aufgabe von einem Positionsmeßsystem für Hydraulikzylinder gemäß Anspruch 1 der vorliegenden Erfindung erfüllt. Hierbei besteht der Kern der Kolbenstange aus einem Metall mit hoher magnetischer Suszeptibilität und weist eine Rillenstruktur in im wesentlichen axialer Richtung auf. Diese Rillenstruktur ist mit einem Metall aufgefüllt, welches eine geringere magnetische Suszeptibilität aufweist als der Kern. Ein in seiner axialen Position feststehender Magnet erzeugt dabei ein Magnetfeld, das von der Rillenstruktur verändert wird, wobei diese Veränderung von mindestens einem Sensor gemessen wird. Da die Veränderung des Magnetfelds von der Position der Rillenstruktur abhängig ist, ist über ihre Messung eine Bestimmung der Position des Kolbens möglich.

Die Verwendung eines Metalls zum Auffüllen der Rillenstruktur ermöglicht es dabei, dass die Kolbenstange in ihren Oberflächeneigenschaften bezüglich Härte, Verschleiß, Korrosionsbeständigkeit und Lebensdauer hervorragende Eigenschaften aufweist, welche denen einer Kolbenstange ohne Positionsmeßsystem entspricht. Insbesondere ist die Oberfläche dadurch sehr glatt, so dass andere Komponenten des Zylinders wie z. B. das Dichtsystem nicht beschädigt werden und das Gesamtsystem somit eine hohe Lebensdauer aufweist. Weiterhin ist durch die Verwendung von Metall zum Auffüllen der Rillenstruktur eine geringe Tiefe dieser Rillenstruktur möglich, so dass deren Kerbwirkung vernachlässigbar wird und die Konstruktion des Zylinders nicht geändert werden muss. Weiterhin findet sich bei diesem System die gesamte Sensorik sowie die diese auswertende Elektronik in einem drucklosen Bereich, wo sie nicht durch Druckspitzen geschädigt werden kann. Insgesamt ergibt sich damit ein einfach aufgebautes und äußerst robustes System, welches preisgünstig hergestellt und betrieben werden kann und insbesondere durch den geringen Verschleiß auch für ein System mit vielen Zylinderhüben verwendet werden kann. Weiterhin kann das erfindungsgemäße Meßsystem in jeden beliebigen Zylinder eingebaut werden, ohne dass dessen Konstruktion grundlegend geändert werden müßte.

Vorzugsweise mißt der mindestens eine Sensor dabei das Magnetfeld entlang einer vorgegebenen Richtung, was die Sensibilität des Sensors für Änderungen des Magnetfeldes erhöht. Vorzugsweise ist der Magnet dabei ein Permanentmagnet, dessen Nord-Süd-Achse in Abhängigkeit von der Anordnung und Ausrichtung des Sensors (30, 40) verläuft. Insbesondere kann dabei die Nord-Süd-Achse in radialer Richtung zum Kolben verlaufen, während die vorgegebene Richtung, in welcher der mindestens eine Sensor das Magnetfeld mißt, senkrecht dazu in axialer Richtung verläuft. Hierdurch ist sichergestellt, dass eine Verschiebung der Rillenstruktur in axialer Richtung das von dem Sensor gemessene Magnetfeld stark beeinflußt, was die Genauigkeit und Zuverlässigkeit der Positionsmessung erhöht.

Vorzugsweise besteht die Rillenstruktur aus Rillen und Erhebungen, wobei in axialer Richtung benachbarte Rillen bzw. Erhebungen der Rillenstruktur vorzugsweise jeweils gleiche Abstände voneinander aufweisen, wobei weiterhin vorzugsweise die Rillenstruktur in axialer Richtung eine periodische und insbesondere im wesentlichen sinusartige Form aufweist. Durch eine solche sich periodisch verändernde Struktur wird die Positionsbestimmung erleichtert, da sich bei einer Bewegung der Kolbenstange das von dem mindestens einen Sensor gemessene Magnetfeld mit der Bewegung ebenfalls periodisch verändert.
Die Veränderung des gemessenen Magnetfelds um eine solche Periode entspricht damit einer Verschiebung der Position der Kolbenstange in axialer Richtung um den Abstand zwischen zwei benachbarten Rillen bzw. Erhebungen. Durch Abzählen der Perioden im gemessenen Magnetfeld lässt sich damit die relative Bewegung der Kolbenposition leicht errechnen.

Um auch eine absolute Positionsbestimmung zu ermöglichen, können vorzugsweise einzelne Rillen oder Erhebungen wegfallen, um Referenzmarken zu bilden. Dabei sind die Referenzmarken vorzugsweise so angeordnet, dass die Anzahl von Erhebungen oder Rillen, die sich zwischen zwei Benachbarten Referenzmarken befinden, über die gesamte Rillenstruktur jeweils unterschiedlich ist, so dass jedes Intervall zwischen zwei Referenzmarken eindeutig durch die Anzahl der Erhebungen oder Rillen charakterisiert ist. Spätestens nachdem der Sensor dabei eine zweite Referenzmarke festgestellt hat, kann er also auch die absolute Position der Kolbenstange exakt angeben.

Das erfindungsgemäße Positionsmeßsystem für einen Hydraulikzylinder, insbesondere mit den erfindungsgemäßen Referenzmarken zur absoluten Positionsbestimmung der Kolbenstange, haben weiterhin den Vorteil, dass die Referenzmarken bereits durch den Einsatz von zwei Sensoren eindeutig erkannt werden können und somit ein einfacher und kostengünstiger Aufbau mit nur wenigen Sensoren möglich ist. Ebenso ist das System dadurch klein und platzsparend zu verwirklichen und muss auch nicht in einer festen radialen Position zur Kolbenstange montiert werden, was wiederum eine einfache und kostengünstige Konstruktion ermöglicht.

Vorzugsweise sind dabei die Referenzmarken so angeordnet, dass die Abstände zwischen zwei Referenzmarken in den Bereichen der Kolbenstangen am kleinsten sind, für welche eine schnelle Positionsangabe wichtig ist. Dies ist üblicherweise der Anfang und das Ende der Kolbenstange, wobei große Abstände zwischen den Referenzmarken in der Mitte der Kolbenstange angeordnet seien können, wo eine schnelle Positionsangabe weniger wichtig ist.

Vorzugsweise ist der metallische Kern hoher magnetischer Suszeptibilität ferromagnetisch, das die Rillenstruktur auffüllende Metall geringerer magnetischer Suszeptibilität nicht ferromagnetisch. Vorzugsweise besteht der metallische Kern dabei aus Stahl.

Vorzugsweise besteht das die Rillenstruktur auffüllende Metall im wesentlichen aus Chrom. Selbstverständlich sind hier aber auch andere Metalle oder Legierungen geeignet, entscheidend dabei ist lediglich der Unterschied in der magnetischen Suszeptibilität. So kann insbesondere auch nicht ferromagnetisches Nickel zum Einsatz kommen. Der Unterschied zwischen der magnetischen Suszeptibilität des metallischen Kerns mit der darauf angebrachten Rillenstruktur und der magnetischen Suszeptibilität des die Rillenstruktur auffüllenden Metalls bewirkt dabei, dass die Stärke des von dem Magneten erzeugten Magnetfelds insbesondere in axialer Richtung in Abhängigkeit von der Position der Rillenstruktur stark schwankt. Diese Schwankung des Magnetfeldes kann nun vom Sensor gemessen werden, welcher sich vorzugsweise zwischen dem Magneten und der Kolbenstange, und zwar in unmittelbarer Nähe der Kolbenstange befindet. Die Verwendung von ferromagnetischem Material für den Kern ist deshalb von Vorteil, da dieses das von außen einwirkende Magnetfeld stark verstärkt, während nicht ferromagnetisches Material diese Eigenschaft nicht aufweist. Nicht ferromagnetisches Metall kann dabei das Magnetfeld im Vergleich zu ferromagnetischem Metall nur sehr gering verändern, wobei eine solche Veränderung je nach Material sowohl in positiver als auch in negativer Richtung möglich ist. Stahl ist in den allermeisten Legierungen ferromagnetisch, so dass die bei Hydraulikzylindern übliche Kolbenstange aus Stahl für das System der vorliegenden Erfindung ohne große Veränderung verwendet werden kann. Chrom ist dagegen nicht ferromagnetisch, so dass es sich als die Rillenstruktur auffüllendes Metall hervorragend eignet, insbesondere da es auch die übrigen Anforderungen an die Oberfläche der Kolbenstange bezüglich Härte, Rauhigkeit, Korrosionsbeständigkeit und Lebensdauer erfüllt.

Alternativ kann die Rillenstruktur vorzugsweise auch mit einer nicht ferromagnetischen Nickellegierung aufgefüllt werden, wobei eine solche nicht ferromagnetische Nickellegierung vorzugsweise ein Phosphoranteil von mehr als 10,5% umfasst. Insbesondere bezüglich des Korrosionsschutzes können sich dadurch Vorteile ergeben.

Weiterhin kann eine solche die Rillenstruktur auffüllende nicht ferromagnetische Nickelschicht glatt geschliffen und nochmals mit Chrom beschichtet werden.

Weiterhin ist es vorzugsweise möglich, zwischen dem metallischen Kern hoher Suszeptibilität und dem die Rillenstruktur auffüllenden Metall niedriger Suszeptibilität eine weitere Metallschicht anzubringen. Die magnetischen Eigenschaften dieser Metallsicht sind dabei nicht entscheidend, so dass mit Hilfe dieser zusätzlichen Metallschicht Eigenschaften wie Korrosionsbeständigkeit, Lebensdauer und Haftung des die Rillenstruktur auffüllenden Metalls entscheidend verbessert werden können. Insbesondere ist hierzu eine dünne ferromagnetische Nickelschicht geeignet, welche vorzugsweise galvanisch oder stromlos auf das Rillenmuster aufgebracht wird und weiterhin vorzugsweise eine Dicke von weniger als 50 µm aufweist. Diese Metallschicht, insbesondere aus Nickel, dient in erster Linie dem verbesserten Korrosionsschutz der Stange. Die Schicht ist zwar unter Umständen magnetisch, verändert jedoch nicht das vom Sensor gemessene Signal, da sie gleichmäßig über der ganzen Rillenstruktur aufwächst.

Vorzugsweise weist die Rillenstruktur abwechselnd Rillen und Erhebungen auf, wobei vorzugsweise die Tiefe der Rillen gegenüber den Erhebungen ca. 200 µm beträgt. Dabei füllt dass die Rillenstruktur auffüllende Metall diese Rillenstruktur vorzugsweise komplett auf, so dass die Dicke des Metalls über den Rillen mehr als 200 µm beträgt. Über den Erhebungen weist dass die Rillenstruktur auffüllende Metall vorzugsweise eine Dicke von ca. 50 µm auf. Die möglicherweise angebrachte zusätzliche Metallschicht zwischen dem metallischen Kern und dem die Rillenstruktur auffüllenden Metall weist dabei vorzugsweise eine Dicke von weniger als 50 µm auf. Diese Metallschicht ist vorzugsweise galvanisch oder stromlos auf dem metallischen Kern aufgebracht.

Dass die Rillenstruktur auffüllende Metall, insbesondere also Chrom, ist vorzugsweise ebenfalls durch Galvanisieren auf dem metallischen Kern bzw. auf der den metallischen Kern umhüllenden Metallschicht insbesondere aus Nickel aufgebracht. Da das Aufbringen von Chromschichten mit einer Dicke von mehr als 50 µm problematisch ist, weil in solchen dicken Schichten Zugspannungen entstehen, die zu Rissen führen, wird das die Rillenstruktur auffüllende Metall, insbesondere also Chrom, vorzugsweise mit einem Multilagenverfahren aufgebracht. Bei einem solchen Multilagenverfahren wird das Metall in mehreren Schichten von jeweils weniger als 50 µm aufgebracht, wobei sich zwischen den Schichten jeweils ein Übergangsbereich bildet, der eventuelle Spannungen abbaut. Bei einer solchen Struktur von mehreren dünnen Schichten übereinander ist die Häufigkeit von Rissen sehr viel geringer und Risse werden an den Übergangsbereichen gestoppt.

Durch ein Überschleifen der Kolbenstange wird überflüssiges die Rillenstruktur auffüllendes Metall abgetragen und die Oberfläche der Kolbenstange geglättet. Vorzugsweise sollte die Mindestdicke des die Rillenstruktur auffüllenden Metalls, insbesondere also des Chroms, 50 µm nicht unterschreiten. Durch das Überschleißen der Kolbenstange ergibt sich eine glatte Oberfläche, welche insbesondere bezüglich Härte, Rauhigkeit, Korrosionsbeständigkeit und Lebensdauer keinen Nachteil gegenüber einer normalen Kolbenstange aufweist.

Wird die Rillenstruktur mit einer nicht ferromagnetischen Nickellegierung aufgefüllt, geschieht dies vorzugsweise ebenfalls galvanisch. Nicht ferromagnetische Nickelschichten lassen sich jedoch auch stromlos abscheiden. Nach dem Überschleifen der Kolbenstange zur Glättung der Oberfläche wird diese nun vorzugsweise mit einer Chromschicht beschichtet, was vorzugsweise ebenfalls galvanisch geschieht und die Oberflächeneigenschaften nochmals erhöht.

Ein Sensor zum Messen des Magnetfeldes umfasst vorzugsweise einen magnetoresistiven Sensor, welcher weiterhin vorzugsweise aus mehreren magnetoresistiven Widerstandsstrukturen aufgebaut ist. Hierbei kommen entweder herkömmliche magnetoresistive Sensoren oder GMR (Giant-Magneto-Resistant) Sensoren zum Einsatz. Beide Sensortypen sind hervorragend zur Messung von Magnetfeldern geeignet, wobei die GMR-Sensoren einen besseren Wirkungsgrad aufweisen. Vorzugsweise sind diese mangetoresestiven Widerstandsstrukturen in zwei Brückenschaltungen, der Sinus- und der Kosinusschaltung, angeordnet, wobei der Abstand der magnetoresistiven Widerstandsstrukturen vorzugsweise der Periodenlänge der Rillenstruktur angepaßt ist. Der Sensor befindet sich dabei zwischen Magnet und Kolbenstange und misst das Magnetfeld vorzugsweise in axialer Richtung, da diese Komponente bei axialer Bewegung der Kolbenstange und damit des Rillenmusters am stärksten beeinflusst wird.

Die von einem solchen Sensor abgegebenen Signale werden vorzugsweise über ihr Quadratursignal ausgewertet, welches sich weiterhin über einen Quadraturzähler auswerten lässt und ein inkrementales Positionssignal mit einer Auflösung von einem Viertel der Periodenlänge der Rillenstruktur liefert. Dabei zählt der Quadraturzähler die Flanken des Sinus- und des Kosinussignals, wobei vorzugsweise eine Analyse der Phasenbeziehung zwischen den beiden Signalen eine Aussage über die Richtung liefert. Wird eine höhere Positionsauflösung benötigt, so kann die Auflösung vorzugsweise durch eine Koeffizientenbildung aus Sinus- und Kosinussignal soweit erhöht werden, dass sich Auflösungen von besser als einem dreihundertsechzigstel der Periodenlänge der Rillenstruktur erreichen lassen.

Vorzugsweise weist das erfindungsgemäße Positionsmeßsystem zwei Sensoren auf, welche in axialer Richtung einen festen Abstand zueinander aufweisen. Insbesondere ist es vorteilhaft, wenn der Abstand zwischen den beiden Sensoren ein Vielfaches und hier insbesondere ein Zweifaches der Periodenlänge der Rillenstruktur aufweist. Die Referenzmarken in Form von ausgelassenen Rillen oder Erhebungen können durch einen Vergleich der Signale aus den beiden Sensoren erkannt werden, womit auch eine absolute Positionsmessung möglich wird.

Würde nur ein Sensorchip mit Sinus- und Kosinusbrücke verwendet, so ließe sich das Überfahren einer Referenzmarke nicht eindeutig detektieren. Der Sensor sähe dabei nur, dass sich das Magnetfeld für eine gewissen Zeit nicht mehr ändert. Dies könnte jedoch auch darauf zurückzuführen sein, dass die Kolbenstange nicht weiter bewegt wird und das System also ruht. Dieses Problem wird vorzugsweise durch die Verwendung des zweiten Sensors gelöst. Überfährt der Sensor dabei eine ausgelassene Rille oder Erhebung, bleibt zuerst der Zählerstand des ersten Quadraturzählers konstant, während der zweite Zähler, welcher dem zweiten Sensor entspricht, weiterläuft. Fährt nun der zweite Sensor über die gleiche ausgelassene Rille oder Erhebung, bleibt der Zählerstand des entsprechenden zweiten Quadraturzählers stehen. Nach dem vollständigen Überfahren der Referenzmarke laufen die beiden Zähler dann wieder synchron. Durch ein solches Signal lässt sich eine Referenzmarke eindeutig detektieren.

Ist die Anzahl der Erhebungen oder Rillen, die sich zwischen zwei benachbarten Referenzmarken befinden, vorzugsweise für jedes Intervall zwischen zwei Referenzmarken unterschiedlich, so kann bei Überfahren einer zweiten Referenzmarke durch Zählen der dazwischen liegenden Rillen oder Erhebungen und der Bestimmung der Bewegungsrichtung aus der Phasenbeziehung zwischen den Kosinus- und Sinussignalen die absolute Position eindeutig bestimmt werden. Insbesondere ist dies mit dem Einsatz von nur zwei Sensoren möglich, was Kosten spart und eine platzsparende Ausführung erlaubt.

Weiterhin weist das Positionssystem für einen Hydraulikzylinder gemäß der vorliegenden Erfindung vorzugsweise einen Sensorhalter auf, der einen Gleitkörper, in dem sich die Sensoren und der Magnet befinden, und eine Feder aufweist. Der vorzugsweise aus Aluminium bestehende Gleitkörper mit den Sensoren sorgt dafür, dass die Sensoren in einem möglichst geringen und konstanten Abstand entlang der Kolbenstangenoberfläche geführt werden können. Der Gleitkörper ist dabei beweglich in einem Gehäuse montiert, wobei er von einer Feder gegen die Oberfläche der Kolbenstange gedrückt wird. Vorzugsweise ist die Vorderseite des Gleitkörpers, welche der Kolbenstange zugewandt ist, gewölbt, wobei der Innenradius des Gleitkörpers vorzugsweise kleiner ist als der Radius der Kolbenstange, so dass der Gleitkörper nur auf seinen äußeren Kanten auf der Kolbenstange aufliegt und so an dieser entlang gleitet. Dabei beträgt der Abstand zwischen der Ebene der Sensoren und der Oberfläche der Kolbenstange vorzugsweise weniger als 1 mm. In diesem Abstand wird das von den Sensoren gemessene Magnetfeld noch stark von der Rillenstruktur beeinflusst, was eine sichere und genaue Erkennung der Rillenstruktur ermöglicht. Hierbei ist insgesamt zu beachten, dass der Abstand der Sensoren von der Rillenstruktur zur Erhöhung der Signalstärke nicht sehr viel größer als die Tiefe der Rillenstruktur, zumindest also im gleichen Größenordnungsbereich, seien sollte.

Zur Verminderung von Reibung und zur Verbesserung des Verschleißschutzes ist der Aluminiumgleitkörper vorzugsweise beschichtet. Weiterhin vorzugsweise besteht dieses Beschichtung aus einer galvanischen Mittelschicht mit PTFE-Einlagerungen.

Weiterhin umfasst die vorliegende Erfindung ein Verfahren zur Herstellung einer Kolbenstange eines erfindungsgemäßen Positionsmeßsystems für einen Hydraulikzylinder, wobei das erfindungsgemäße Rillenmuster in den metallischen Kern eingeschliffen wird, eine oder mehrere Schichten eines Metalls niedrigerer magnetischer Suszeptibilität als der des Kerns auf die Rillenstruktur galvanisch oder stromlos aufgebracht werden, wobei insbesondere Chrom oder eine nicht ferromagnetische Nickellegierung zum Einsatz kommen, und das die Rillenstruktur auffüllende Metall zu einer glatten Oberfläche geschliffen wird.

Vorzugsweise wird bei diesem Verfahren vor dem Aufbringen des die Rillenstruktur auffüllenden Metalls noch eine weitere Metallschicht, insbesondere eine Nickelschicht, galvanisch oder stromlos aufgebracht.

Vorzugsweise umfasst das erfindungsgemäße Verfahren insbesondere bei Verwendung einer nicht ferromagnetischen Nickellegierung zum Auffüllen der Rillenstruktur weiterhin nach dem Schleifen des die Rillenstruktur auffüllenden Metalls einen Schritt, bei welchem eine weitere Metallschicht, insbesondere Chrom, galvanisch oder stromlos aufgebracht wird.

Das auf der Kolbenstange der vorliegenden Erfindung aufgebrachte Muster wurde durchgängig als Rillenstruktur bezeichnet. Hierbei ist es zwar von Vorteil, wenn das Rillenmuster den gesamten Umfang der Kolbenstange rotationssymmetrisch umgibt, da hierdurch beim Zusammenbau von Kolbenstange und Sensor nicht auf die Ausrichtungen der Kolbenstange geachtet werden muss. Auch ist es möglich, die Kolbenstange zu drehen, insbesondere auch bei einer gleichzeitigen axialen Bewegung, ohne das Meßergebnis des Positionsmeßsystems der vorliegenden Erfindung zu beeinflussen. Es ist jedoch offensichtlich, dass eine solche Ausdehnung des Rillenmusters in eine radiale Richtung für das Funktionieren des erfindungsgemäßen Positionsmeßsystems nicht entscheidend ist. Zum Funktionieren des Meßsystems muss die Rillenstruktur in radialer Richtung lediglich eine Ausdehnung aufweisen, die der Ausdehnung des verwendeten Sensors entspricht. Ist diese Ausdehnung sehr klein, können die einzelnen Rillen und Erhebungen auch weitgehend punktförmig sein. Da für die vorliegende Erfindung aber hauptsächlich die axiale Struktur von Bedeutung ist, wird auch eine solche Anordnung als Rillenstruktur bezeichnet.

Ebenso ist es offensichtlich, dass die oben beschriebenen Referenzmarken zur absoluten Bestimmung der Position des Kolbens auch vollkommen unabhängig von der konkreten Ausgestaltung des Maßstabs und der Messapparatur verwendet werden können, da die zugrunde liegende Idee für jeden Maßstab mit im wesentlichen periodischen Markierungen verwendet werden kann. Die Referenzmarken werden in einem solchen allgemeinen absoluten Positionsmesssystem dann von ausgelassenen bzw. veränderten Markierungen auf dem Maßstab gebildet.

Ein Sensor, welcher bei einer Bewegung des Maßstabs die Markierungen registriert und so eine relative Bewegung des Maßstabs misst, kann entweder direkt oder durch den Vergleich mit einem zweiten Sensor, welcher in Bewegungsrichtung des Maßstabs einen gewissen Abstand zum ersten Sensor aufweist, die veränderte oder weggelassene Markierung und damit die Referenzmarke erkennen.

Zur eindeutigen Identifizierung der einzelnen Referenzmarken sind die Referenzmarken dann vorzugsweise so angeordnet, dass die Anzahl von Markierungen, die sich zwischen zwei benachbarten Referenzmarken befinden, über die gesamte Rillenstruktur jeweils unterschiedlich ist, so dass jedes Intervall zwischen zwei Referenzmarken eindeutig durch die Anzahl der Markierungen charakterisiert ist. Spätestens nachdem der Sensor dann eine zweite Referenzmarke festgestellt hat, kann er also auch die absolute Position des Maßstabs exakt angeben.

Die weiter oben angegebenen Vorteile des speziellen Systems ergeben sich in gleicher Weise auch für die allgemeinen Referenzmarken zur absoluten Bestimmung der Position eines Maßstabs, ebenso wie sich die im speziellen System beschriebenen Eigenschaften insbesondere bezüglich der Anzahl und dem Abstand der Markierungen, der Referenzmarken und der Sensoren auf das allgemeine System übertragen lassen.

Ebenso ist offensichtlich, dass der Aufbau des Sensorhalters insbesondere mit dem Gleitkörper mit einer Innenwölbung mit einem kleineren Radius als dem Radius der Kolbenstange und der Oberflächenbeschichtung unabhängig von der konkreten Ausgestaltung der Markierungen auf der Kolbenstange verwendet werden kann.

Ebenso verhält es sich mit dem Aufbau der Sensoren, der ebenfalls unabhängig von der konkreten Ausgestaltung der Markierungen auf der Kolbenstange ist.

Im folgenden wird die vorliegende Erfindung anhand von Ausführungsbeispielen näher beschrieben. Dabei zeigt:
- Figur 1:: eine schematische Schnittansicht eines Ausführungsbeispiels des Positionsmeßsystems für einen Hydraulikzylinder der vorliegenden Erfindung,
- Figur 2:: eine schematische Schnittansicht eines ersten Ausführungsbeispiels einer Kolbenstange gemäß der vorliegenden Erfindung,
- Figur 3a:: eine schematische Schnittansicht eines zweiten Ausführungsbeispiels einer Kolbenstange gemäß der vorliegenden Erfindung,
- Figur 3b:: eine schematische Schnittansicht eines dritten Ausführungsbeispiels einer Kolbenstange gemäß der vorliegenden Erfindung,
- Figur 4:: eine schematische Ansicht eines vierten Ausführungsbeispiels einer Kolbenstange gemäß der vorliegenden Erfindung mit darauf angebrachten Referenzmarken,
- Figur 5a:: eine schematische Schnittansicht eines von der Rillenstruktur veränderten Magnetfeldes H,
- Figur 5b:: die Veränderung eines Magnetfelds H_{y} in axialer Richtung in Abhängigkeit von der axialen Position über der Rillenstruktur,
- Figur 6a:: Ausgangssignale einer Sinus- und Kosinusschaltung eines Ausführungsbeispiels eines Sensors der vorliegenden Erfindung,
- Figur 6b:: die Auswertung dieser Sinus- und Kosinussignale über ihr Quadratursignal,
- Figur 7:: eine perspektivische Ansicht eines Ausführungsbeispiels eines Sensorhalters der vorliegenden Erfindung und
- Figur 8:: eine perspektivische Ansicht eines aufgeschnittenen Ausführungsbeispiels des Sensorhalters der vorliegenden Erfindung.

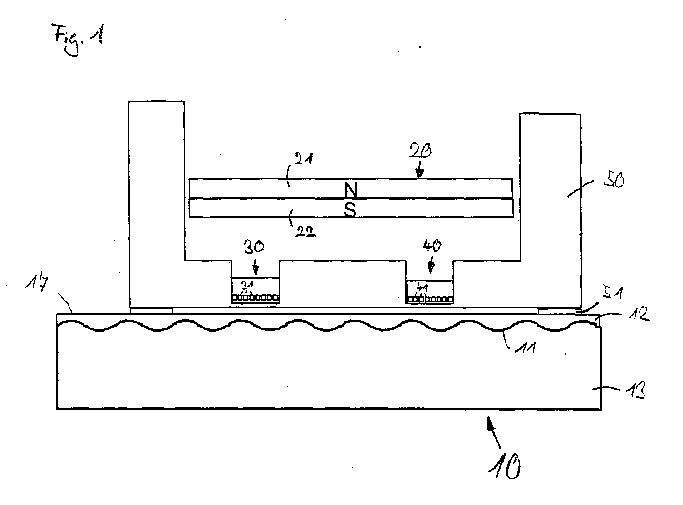

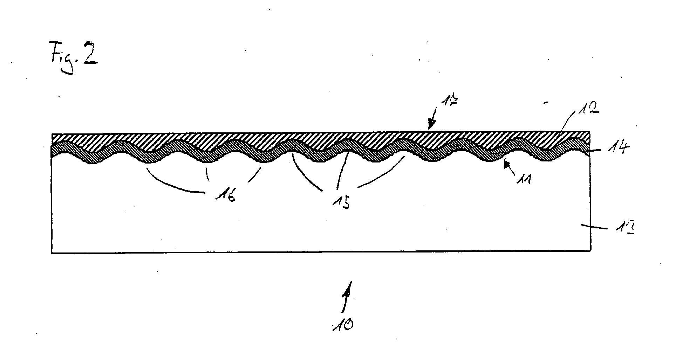

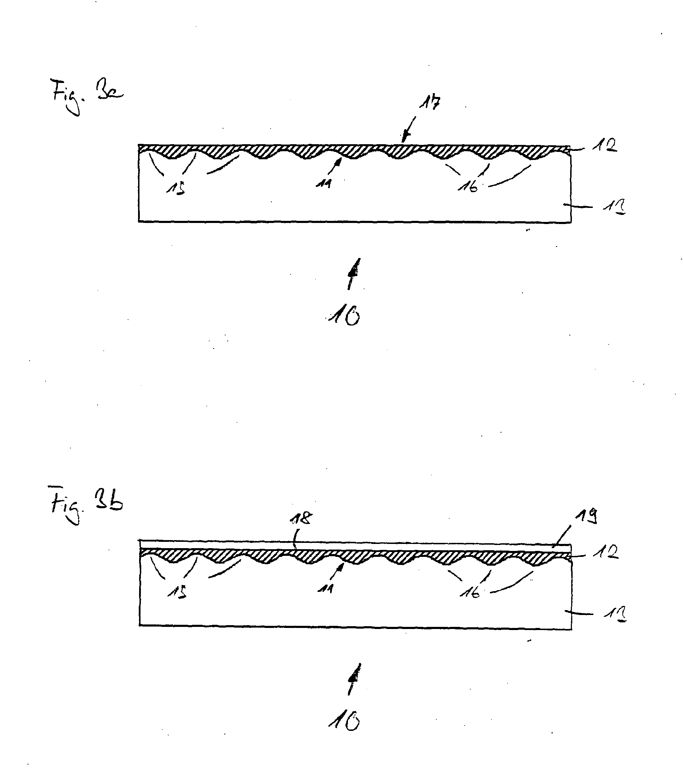

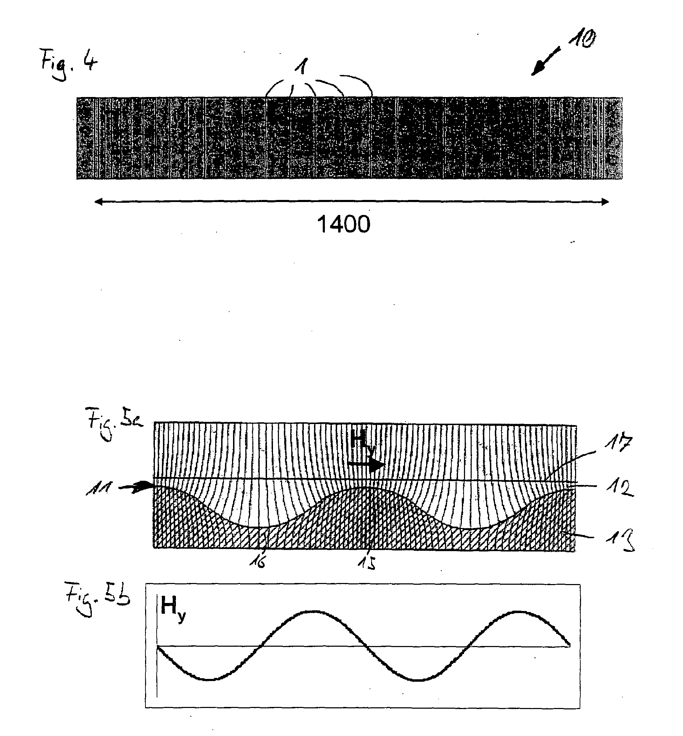

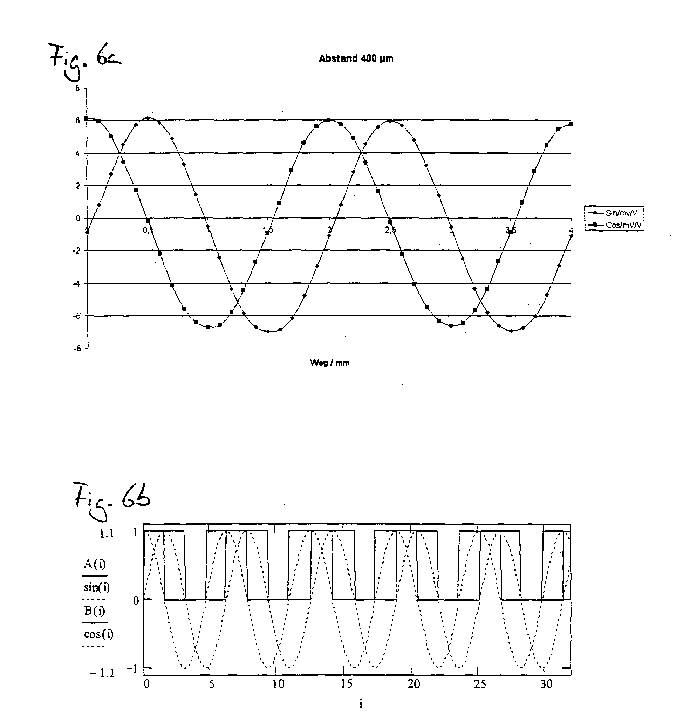

Das in Figur 1 gezeigte Ausführungsbeispiel eines Positionsmeßsystems für einen Hydraulikzylinder umfasst dabei eine Kolbenstange 10 mit einem metallischen Kern 13 hoher magnetischer Suszeptibilität, eine Rillenstruktur 11 in im wesentlichen axialer Richtung und einem Metall 12 mit geringerer magnetischer Suszeptibilität als der des Kerns 13, welches das Rillenmuster 11 auffüllt und eine glatte Oberfläche 17 aufweist. Weiterhin umfasst das Ausführungsbeispiel des erfindungsgemäßen Positionsmeßsystems einen Permanentmagneten 20, bei dem der Nordpol 21 und der Südpol 22 so angeordnet sind, dass die Nord-Süd-Achse des Permanentmagneten 20 im wesentlichen in radialer Richtung verläuft und somit senkrecht zur Achse der Kolbenstange 10. Zwischen dem Permanentmagneten 20 und der Kolbenstange 10 befinden sich Magnetsensoren 30 und 40, hier als magnetoresistive Sensorchips ausgeführt, welche aus magnetoresistiven Widerstandsstrukturen 31, 41 aufgebaut sind. Die magnetoresistiven Widerstandsstrukturen 31, 41 sind dabei in einer Linie parallel zur Achse der Kolbenstange 10 nahe der Oberfläche 17 der Kolbenstange 10 angeordnet. Die beiden Sensoren 30 und 40 weisen einen festen axialen Abstand auf, welcher in dem gezeigten Ausführungsbeispiel dem dreifachen der Periodenlänge der Rillenstruktur 11 entspricht. Der Magnet 20 und die Sensoren 30, 40 sind dabei in einem Gleitkörper 50 angebracht, welcher über eine Beschichtung 51 auf der Oberfläche 17 der Kolbenstange 10 aufliegt.

Figur 2 zeigt ein erstes Ausführungsbeispiel einer Kolbenstange 10 der vorliegenden Erfindung. Die Rillenstruktur 11 erstreckt sich dabei in axialer Richtung im wesentlich sinusförmig über die Länge des Kolbens 10. Die Wellenlänge der Rillenstruktur 11 beträgt dabei in dem ersten Ausführungsbeispiel 2 mm, die Tiefe der Rillenstruktur 11 ca. 200 µm. Die Rillenstruktur 11 ist dabei in dem ferromagnetischen Kern 13 der Kolbenstange 10 im wesentlichen radialsymmetrisch um den ganzen Umfang der Kolbenstange 10 eingeschliffen. Die Tiefe der Rillenstruktur 11 entspricht dem Unterschied in der Dicke des Kerns 13 zwischen Rillen 16 und Erhebungen 15. Der Kern 13 der Kolbenstange 10 ist dabei wie bei Hydraulikzylindern üblich aus Stahl ausgeführt, wobei die Konstruktion des Zylinders für das Positionsmeßsystem nicht extra geändert werden muss, da durch die geringe Tiefe der Rillenstruktur deren Kerbwirkung vernachlässigbar klein ist. Auf der Rillenstruktur 11 ist in dem ersten Ausführungsbeispiel eine dünne mittlere Metallschicht 14 aufgebracht, welche aus ferromagnetischem Nickel besteht. Diese dünne ferromagnetische Nickelschicht 14 wird galvanisch oder stromlos auf den Kern 13 aufgebracht, wobei sie eine Dicke von weniger als 50 µm aufweist. Diese Mittelschicht dient dem verbesserten Korrosionsschutz der Stange. Sie ist zwar unter Umständen magnetisch, ändert jedoch nicht die von den Sensoren gemessene Signalform, da sie gleichmäßig über der gesamten Struktur aufwächst. Die Rillenstruktur 11 wird daraufhin mit einem nicht ferromagnetischem Metall aufgefüllt, in diesem Fall mit Chrom. Die die Rillenstruktur 11 auffüllende Chromschicht 12 wird galvanisch aufgebracht, wobei aufgrund der Dicke der Chromschicht von mehr als 200 µm eine Multilagen-Chromschicht verwendet wird. Das Aufbringen von dicken Chromschichten von mehr als 50 µm ist problematisch, da in dicken Schichten Zugspannungen entstehen, die zu Rissen führen. Diese Risse können bis zum Grundmaterial reichen und sind somit Angriffspunkte für die Korrosion der Kolbenstange. Beim Multilagenverfahren wird das Chrom in Schichten von weniger als 50 µm aufgebracht. Zwischen den Schichten bildet sich jeweils ein Übergangsbereich, der die Spannung abbaut. Die Häufigkeit von Rissen ist somit viel geringer und Risse werden an den Übergangsbereichen gestoppt. Die Multilagen-Chromschicht wächst durch das galvanische Aufbringen gleichmäßig auf der Nickelschicht 14 auf, weshalb die Oberfläche der Kolbenstange 10 nach dem Aufbringen der Multilagen-Chromschicht noch ein Rillenmuster 11 aufweist. Dieses wird durch Überschleifen der Kolbenstange 10 entfernt, wobei die Chromschicht 12 nach dem Abschleifen noch eine Mindestdicke von 50 µm über den Erhebungen 16 aufweist. Durch das Überschleifen der Kolbenstange ergibt sich eine glatte Oberfläche 17, welche in ihren Oberflächeneigenschaften (Härte, Verschleiß, Korrosionsbeständigkeit, Lebensdauer) denen eines normalen Systems ohne Positionsmessung entspricht. Insbesondere weist die Oberfläche 17 auch eine sehr geringe Rauhigkeit auf, womit die übrigen Komponenten des Hydraulikzylinders, insbesondere das Dichtsystem, nicht abrasiv geschädigt werden und das System auch für Anwendungen mit vielen Kolbenhüben geeignet ist. Durch die Verwendung von ferromagnetischem Stahl für den Kern 13 und nicht ferromagnetischem Chrom für das die Rillenstruktur 11 auffüllende Metall 12 ergibt sich an dieser Rillenstruktur 11 ein großer magnetischer Kontrast, welcher das von dem Magneten 20 erzeugte Magnetfeld stark verändert.

Figur 3a zeigt ein zweites Ausführungsbeispiel einer Kolbenstange der vorliegenden Erfindung, welches im wesentlichen dem ersten Ausführungsbeispiel der Kolbenstange entspricht, wobei jedoch die Nickelschicht 14 entfällt. Diese Nickelschicht 14 dient im ersten Ausführungsbeispiel als zusätzlicher Korrosionsschutz für extreme Einsatzbedingungen und kann, wie im zweiten Ausführungsbeispiel gezeigt, auch entfallen, wodurch der Aufbau einfacher wird und Produktionskosten gespart werden können.

Figur 3b zeigt ein drittes Ausführungsbeispiel einer Kolbenstange der vorliegenden Erfindung, wobei die Rillenstruktur 11 mit einer galvanisch aufgebrachten nicht ferromagnetischen Nickelschicht 12 aufgefüllt wird. Hierbei ist anzumerken, dass galvanisch aufgebrachte Nickelschichten in der Regel ferromagnetische Eigenschaften haben und somit zum Auffüllen der Rillenstruktur nicht geeignet sind. Durch den Einbau von mehr als 10,5% Phosphor in die Schicht lässt sich jedoch auch nicht ferromagnetisches Nickel galvanisch abscheiden. Diese nicht ferromagnetischen Nickelschichten ließen sich zwar leichter stromlos abscheiden, für ein solches stromloses Auffüllen der Rillenstruktur 11 ist die Strukturtiefe jedoch zu groß. Durch das gleichmäßige Aufwachsen der Nickelschicht 12 weist deren Oberfläche nach dem Aufwachsen weiterhin eine Rillenstruktur 11 auf. Diese wird durch Überschleifen der Kolbenstange entfernt, womit sich eine glatte Oberfläche 18 ergibt. Schließlich wird die Kolbenstange 10 konventionell mit einer Chromschicht 19 beschichtet. Auch durch diesen Aufbau ergeben sich hervorragende Eigenschaften bezüglich Härte, Verschleiß, Korrosionsbeständigkeit, Lebensdauer und Glätte der Oberfläche. Auch können die einzelnen Schichten einfach und preisgünstig aufgebracht werden. Wiederum ergibt sich durch die Verwendung eines ferromagnetischen Kerns 13 und eines nicht ferromagnetischen Metalls 12 zum Auffüllen der Rillenstruktur 11 an dieser Rillenstruktur 11 ein starker magnetischer Kontrast, wodurch das von dem Magneten 20 erzeugte Magnetfeld stark abgelenkt wird.

Die Sensoren 30, 40 messen diese Ablenkung des Magnetfeldes, wenn die Kolbenstange 10 an ihnen in axialer Richtung vorbei bewegt wird. Das Magnetfeld verändert sich dabei periodisch mit der Rillenstruktur 11, womit durch Abzählen der Perioden die Messung von relativen Positionen möglich ist. Für eine absolute Positionsmessung werden jedoch Zusatzinformationen benötigt, welche in dem in Figur 4 gezeigten vierten Ausführungsbeispiel einer Kolbenstange 10 der vorliegenden Erfindung in Form von Referenzmarken 1 zur Verfügung gestellt werden. Diese Referenzmarken 1 werden durch das Auslassen von Rillen 16 und Erhebungen 15 in der ansonsten periodischen Rillenstruktur 11 gesetzt. Die Referenzmarken 1 werden in dem vierten Ausführungsbeispiel der erfindungsgemäßen Kolbenstange 10 dabei so angeordnet, dass die Anzahl von Erhebungen 15 oder Rillen 16, die sich zwischen zwei benachbarten Referenzmarken 1 befinden, über die gesamte Rillenstruktur 11 jeweils unterschiedlich ist, so dass jedes Intervall zwischen zwei Referenzmarken eindeutig durch die Anzahl der Erhebungen oder Rillen zwischen den beiden Referenzmarken charakterisiert ist. Somit ist nach dem Überfahren zweier aufeinander folgender Referenzmarken 1 die absolute Position bekannt. Durch die Anordnung der Referenzmarken 1 auf dem Ausführungsbeispiel der Kolbenstange lässt sich der maximale Verfahrweg bis zu einer Referenzierung, das heißt bis zu einer absoluten Positionsangabe vorgeben. Wird eine besonders schnelle Referenzierung z. B. an den Endlagen des Zylinders angestrebt, dann werden die Referenzmarken so angeordnet, dass der Abstand zwischen zwei Referenzmarken an den Endlagen möglichst klein ist, wie in Figur 4 gezeigt.

In diesem vierten Ausführungsbeispiel der Kolbenstange 10 der vorliegenden Erfindung sind die ausgelassenen Rillen so angeordnet, dass sich, von der linken Seite beginnend, zwischen den ersten zwei ausgelassenen Rillen fünf Rillen befinden. Der Abstand zwischen der zweiten und der dritten ausgelassenen Rille beträgt sieben Rillen, zwischen der dritten und der vierten neun Rillen und so weiter. Von der rechten Seite beginnend beträgt der Abstand zwischen der ersten und der zweiten ausgelassenen Rille sechs Rillen. Der Abstand zwischen der zweiten und der dritten ausgelassenen Rille beträgt acht Rillen, dann zehn, zwölf und sofort. In der Mitte der Stange erfolgt dann der Übergang von geraden zu ungeraden Abständen. Die Gesamtanzahl der Rillen beträgt bei diesem Ausführungsbeispiel ungefähr 1400.

Durch die Referenzmarken 1 in Form von ausgelassenen Rillen oder Erhebungen und den eindeutig identifizierbaren Abständen zwischen zwei solchen Referenzmarken 1 lässt sich auf einfache und schnelle Weise ein zuverlässige und genaue absolute Positionsmessung verwirklichen, ohne dass ein aufwendiges Muster verwendet werden muss.

Figur 5a zeigt, wie sich das Magnetfeld des sich oberhalb des Bildausschnitts befindlichen nicht dargestellten Magneten 20 aufgrund der Rillenstruktur 11 verändert.

Die von oben nach unten verlaufenden Linien beschreiben dabei die Kraftlinien des Magnetfelds, wobei geringe Abstände zwischen den Linien ein starkes Magnetfeld und größere Abstände zwischen den Linien ein schwächeres Magnetfeld bedeuten. In einem großen Abstand von der Oberfläche 17 der Kolbenstange 10 ist das Magnetfeld noch weitgehend ungestört und verläuft gleichmäßig in radialer Richtung, im Bild also von oben nach unten. Dass zum Auffüllen der Ringstruktur 11 verwendete nicht ferromagnetische Metall 12 hat eine sehr geringe Suszeptibilität und verstärkt das Magnetfeld in seinem Inneren daher kaum. Es beeinflußt damit den Verlauf der Feldlinien so gut wie nicht, was im Bild auch daran zu erkennen ist, dass die Feldlinien an der Oberfläche 17 nicht gebrochen werden. Ganz anders verhält es sich jedoch mit dem ferromagnetischen Metall des Kerns 13. Dieses weist eine sehr hohe Suszeptibilität auf und verstärkt das Magnetfeld in seinem Inneren, was auch daran zu erkennen ist, dass die Magnetfeldlinien an der Rillenstruktur 11 gebrochen werden. Bei dem näher am Magneten 20 gelegenen Erhebungen 15 ist deshalb das Magnetfeld stärker als in den weiter von dem Magneten 20 entfernten Rillen 16. Dies ist in Figur 5a an den sehr viel geringeren Abständen der Magnetfeldlinien an den Erhebungen 15 als an den Rillen 16 zu erkennen. Hierdurch verläuft das Magnetfeld im Bereich oberhalb der Rillenstruktur 11 nicht mehr radial sondern weist eine im allgemeinen von 0 verschiedene Komponente H_{y} in axialer Richtung auf.

In Figur 5b ist die Stärke des Magnetfelds H_{y}, gemessen knapp oberhalb der Oberfläche 17 der Kolbenstange 10, in Abhängigkeit von der Position über der Rillenstruktur 11 angegeben. Da die Rillenstruktur 11 in dem Ausführungsbeispiel im wesentlichen die Form einer Sinuskurve aufweist, hat auch der Anteil des Magnetfelds in axialer Richtung H_{y} eine solche Form. Direkt oberhalb einer Erhebung 15 oder einer Rille 16 ist das Magnetfeld in axialer Richtung H_{y} dabei 0, oberhalb der schrägen Abschnitte zwischen den Rillen 16 und den Erhebungen 15 dagegen jeweils entweder positiv oder negativ. Die Sensoren sind in dem Ausführungsbeispiel dabei in einer Ebene parallel zur Achse der Kolbenstange 10 in einem Abstand von weniger als 1 mm von der Oberfläche 17 der Kolbenstange 10 angeordnet. Der Permanentmagnet 20 und die Sensoren 30, 40 sind dabei in dem Ausführungsbeispiel in axialer Richtung fest montiert, wodurch das von den Sensoren gemessene Magnetfeld H_{y} bei einer axialen Bewegung der Kolbenstange 10 sinusförmig moduliert wird. Die Modulation des Magnetfelds H_{y} um eine Periode entspricht dabei der Bewegung der Kolbenstange um den Abstand zwischen zwei Rillen.

Die in dem Ausführungsbeispiel eingesetzten Sensoren 30, 40 sind dabei als magnetoresistive Magnetfeldsensoren ausgeführt. Diese Standardsensoren für die Vermessung von modulierten Magnetfeldern bestehen aus mehreren magnetoresistiven Widerstandsstrukturen 31, 41, die in zwei Brückenschaltungen, der Sinus- und der Kosinusbrücke verschaltet sind. Die Auswahl der Sensoren 30, 40 erfolgt so, dass die geometrischen Abstände der Widerstände auf den Sensorchip der Periodenlänge der zu vermessenden Magnetfeldstruktur, und damit der Periodenlänge der Rillenstruktur 11 angepaßt sind. Genauso gut können aber auch GMR-Sensoren zum Einsatz kommen.

Figur 6a zeigt das Signal der Sinus- und der Kosinusbrücke, während die erfindungsgemäße Kolbenstange 10 mit der Rillenstruktur 11 in axialer Richtung an einem Sensor vorbeigeschoben wird, wobei der Sensor quer zur Meßrichtung um 2,6 mm aus der Magnetmitte versetzt angeordnet ist und sich die magnetoresistiven Widerstandsstrukturen 31, 41 der Sensoren 30, 40 in 400 µm Abstand von der Oberfläche 17 der Kolbenstange 10 befinden. Figur 6a zeigt dabei deutlich die gegeneinander verschobenen Sinuskurven der Meßsignale.

Diese beiden Signale können mit Standardmethoden ausgewertet werden und liefern dann die Positionen. So kann die Auswertung über das Quadratursignal erfolgen, wie in Figur 6b gezeigt. Dabei werden die Signale mit einer Komparatorschaltung mit Hysterese in ein A-B-Quadratursignal umgewandelt. Dieses Signal lässt sich dann mit einem Quadraturzähler auswerten und liefert ein inkrementales Positionssignal mit einer Auflösung von einem Viertel der Periodenlänge der Rillenstruktur 11. Dabei zählt der Quadraturzähler die Flanken des Sinus- und des Kosinussignals, wobei ein Analyse der Phasenbeziehung zwischen den beiden Signalen eine Aussage über die Richtung der Bewegung liefert. Wird eine höhere Positionsauflösung benötigt, kann man die Auflösung durch eine Quotientenbildung aus Sinus- und Kosinussignal erhöhen. Damit lassen sich Auflösungen von besser als 1/360 der Periodenlänge der Rillenstruktur 11 erreichen. Bereits die Verwendung eines Sensors 30, 40 erlaubt damit eine extrem genaue Bestimmung der Relativbewegung der Kolbenstange.

Für eine absolute Positionsmessung werden jedoch die Zusatzinformationen aus den Referenzmarken 1 benötigt. Bei Verwendung nur eines Sensors 30, 40 lässt sich das Überfahren einer Referenzmarke nicht eindeutig detektieren. Der Sensor "sieht" nur, dass sich das Magnetfeld für eine gewisse Zeit nicht mehr ändert. Dies könnte jedoch auch darauf beruhen, dass die Kolbenstange 10 nicht bewegt wird.

Dieses Problem wird durch die Verwendung zweier Sensoren 30, 40 gelöst. Dabei weisen die Sensoren 30, 40 in axialer Richtung einen festen Abstand zueinander auf. In dem Ausführungsbeispiel der Erfindung beträgt dieser feste Abstand 4 mm, was dem Abstand zwischen zwei Rillen entspricht. Die Anordnung der beiden Sensoren mit einem Abstand, welcher einem Vielfachen der Periodenlänge der Rillenstruktur 11 entspricht, hat den Vorteil, dass die beiden Sensoren das gleiche Signal liefern, wenn sich unter keinem der beiden Sensoren eine Referenzmarke befindet. Über den Vergleich von den beiden Sensoren erzeugten Signale lässt sich damit eine Referenzmarke 1 eindeutig detektieren. Hierzu sollte allerdings der Abstand zwischen den beiden Sensoren kleiner sein als der minimale Abstand zwischen zwei Referenzmarken 1. Wird nun eine Referenzmarke an den Sensoren vorbei bewegt, so bleibt zuerst der Zählerstand des Quadraturzählers des ersten Sensors 30 konstant, während der Quadraturzähler des zweiten Sensors 40 weiter läuft. Darauf hin bewegt sich die Referenzmarke 1 auch am zweiten Sensor 40 vorbei, so dass der Zählerstand des Quadraturzählers des zweiten Sensors 40 sich nicht verändert, während der Zählerstand des Quadraturzählers des ersten Sensors 30 weiter läuft. Nachdem nun die Referenzmarke 1 an beiden Sensoren 30, 40 vorbeigefahren ist, laufen die beiden Quadraturzähler wieder synchron. Durch ein solches Signalverhalten kann eine Referenzmarke 1 also.einwandfrei erkannt werden.

Wird nun auch eine zweite Referenzmarke 1 an den Sensoren 30, 40 vorbeibewegt, so kann über das Zählen der Rillen 16 bzw. der Erhebungen 15 zwischen den beiden Referenzmarken und durch die Bestimmung der Bewegungsrichtung aus dem Phasenvergleich zwischen Sinus- und Kosinussignal die vorliegende spezifische Referenzmarke 1 eindeutig identifiziert werden. Damit ist auch die absolute Position der Kolbenstange 10 eindeutig bekannt. Insbesondere ist dies mit nur zwei Sensoren möglich, so dass bei der Konstruktion Platz und Kosten gespart werden können.

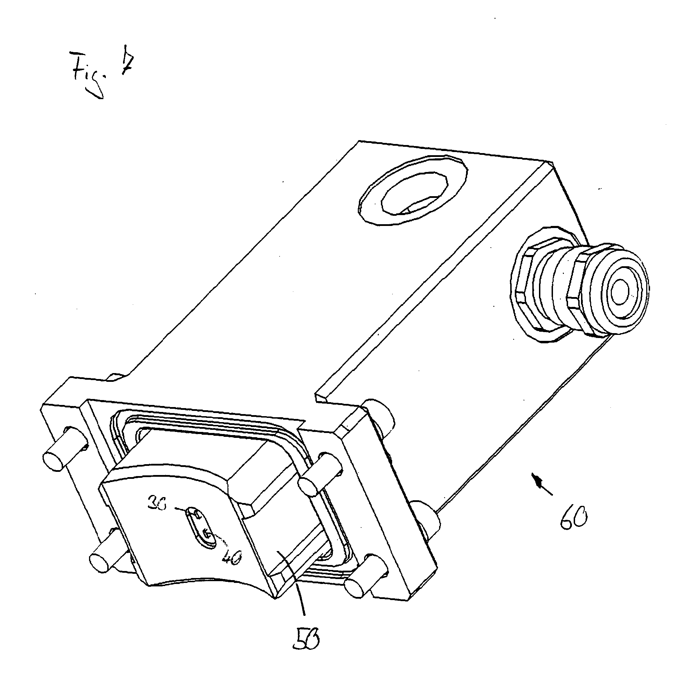

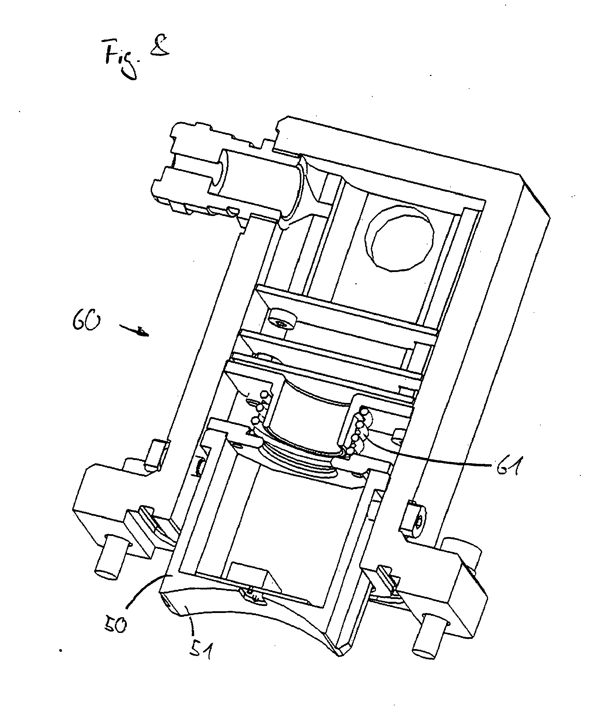

Figuren 7 und 8 zeigen den Aufbau eines Ausführungsbeispiels eines Sensorhalters 60 der vorliegenden Erfindung. Der Sensorhalter 60 ist dabei so ausgelegt, dass die beiden magnetoresistiven Sensoren 30, 40 in einem möglichst geringen und konstanten Abstand entlang der Oberfläche 17 der Kolbenstange 10 geführt werden können. Der geringe Abstand zwischen der Kolbenoberfläche 17 und den Sensoren 30, 40 ist deshalb wichtig, da nur in geringem Abstand von der Rillenstruktur 11 das Magnetfeld des hinter den Sensoren gelegenen Magneten 20 stark von der Rillenstruktur 11 verändert wird. Um ein gutes Signal zu erhalten, sollte das Magnetfeld also möglichst nah an der Oberfläche 17 und damit möglichst nah an der Rillenstruktur 11 gemessen werden. Dieser Abstand sollte dabei auch während einer axialen Bewegung der Kolbenstange 10 konstant bleiben, damit die Meßergebnisse nicht verfälscht werden.

Das Ausführungsbeispiel des erfindungsgemäßen Sensorhalters 60 umfasst deshalb einen Gleitkörper 50 aus Aluminium, welcher die Sensoren 30 und 40 und den Permanentmagneten 20 hält. Der Gleitkörper 50 wird dabei von einer Feder 61 auf die Kolbenstange 10 gedrückt. Der Abstand zwischen der Ebene der magnetoresistiven Widerstände 31, 41 in den Sensoren 30 und 40 und der Oberfläche 17 der Kolbenstange 10 beträgt dabei weniger als 1 mm.

Die Innenseite des Gleitkörpers 50 ist dabei so gewölbt, dass dessen Innenradius kleiner ist als der Radius der Kolbenstange, so dass der Gleitkörper nur auf seinen äußeren Kanten auf der Kolbenstange entlang gleitet.

Zur Minderung von Reibung und zur Verbesserung des Verschteißschutzes ist der Aluminiumgleitkörper 50 in dem Ausführungsbeispiel mit einer Beschichtung 51 versehen. Dabei handelt es sich um eine galvanische Nickelschicht mit PTFE-Einlagerungen.

Der gesamte Sensorhalter 60 wird im drucklosen Bereich in den Zylinderdeckel integriert. Zur Vermeidung von Verschleiß durch von außen eindringende Verschmutzung befinden sich zwischen dem System und dem Außenbereich noch ein Abstreifer und Dichtungen bzw. Führungsbänder.

Dies erhöht die Stabilität und Lebensdauer des Aufbaus zusätzlich, da sich die gesamte Sensorik und Elektronik in einem drucklosen Bereich befindet und somit nicht durch Druckspitzen geschädigt werden kann.

Dies ist insbesondere im Vergleich zu magnetostriktiven Meßsystemen von Vorteil, da bei diesen das Meßsystem in den Hochdruckbereich des Zylinders integriert werden muss.

## Patentansprüche

1. Positionsmeßsystem für einen Hydraulikzylinder, mit einem Magneten (20), mindestens einem Sensor (30, 40), und einer Kolbenstange (10) mit einem metallischen Kern (13) hoher magnetischer Suszeptibilität und einer Rillenstruktur (11) in im wesentlichen axialer Richtung,
**dadurch gekennzeichnet,**
**dass** die Rillenstruktur (11) mit einem Metall (12) aufgefüllt ist, welches eine geringere magnetische Suszeptibilität aufweist als der Kern (13), so dass der mindestens eine Sensor (30,40) ein in Abhängigkeit von der Position der Rillenstruktur (11) verändertes Magnetfeld des Magneten (20) mißt.

2. Positionsmeßsystem für einen Hydraulikzylinder nach Anspruch 1, wobei der mindestens eine Sensor (30,40) das Magnetfeld entlang einer vorgegebenen Richtung mißt.

3. Positionsmeßsystem für einen Hydraulikzylinder nach Anspruch 1, wobei der Magnet (20) ein Permanentmagnet ist, dessen Nord-Süd-Achse in Abhängigkeit von der Anordnung und Ausrichtung des Sensors (30, 40) verläuft.

4. Positionsmeßsystem für einen Hydraulikzylinder nach Anspruch 1, wobei die Rillenstruktur (11) aus Rillen (16) und Erhebungen (15) besteht.

5. Positionsmeßsystem für einen Hydraulikzylinder nach Anspruch 4, wobei in axialer Richtung benachbarte Rillen (16) bzw. Erhebungen (15) jeweils gleiche Abstände voneinander aufweisen.

6. Positionsmeßsystem für einen Hydraulikzylinder nach Anspruch 1 oder 4, wobei die Rillenstruktur in axialer Richtung eine im wesentlichen periodische, insbesondere eine im wesentlichen sinusartige Form aufweist.

7. Positionsmeßsystem für einen Hydraulikzylinder nach Anspruch 4 oder 5, wobei einzelne Rillen (16) oder Erhebungen (15) wegfallen, um Referenzmarken (1) zu bilden.

8. Positionsmeßsystem für einen Hydraulikzylinder nach Anspruch 7, wobei die Referenzmarken (1) so angeordnet sind, dass die Anzahl von Erhebungen (15) oder Rillen (16), die sich zwischen zwei benachbarten Referenzmarken (1) befinden, über die gesamte Rillenstruktur (11) jeweils unterschiedlich ist, so dass jedes Intervall zwischen zwei Referenzmarken eindeutig durch die Anzahl der Erhebungen (15) oder Rillen (16) charakterisiert ist.

9. Positionsmeßsystem für einen Hydraulikzylinder nach Anspruch 7, wobei in Bereichen der Kolbenstange (10), für welche eine schnelle Positionsangabe nötig ist, die Abstände zwischen den Referenzmarken (1) kleiner sind als im übrigen Bereich.

10. Positionsmeßsystem für einen Hydraulikzylinder nach Anspruch 1, wobei der metallische Kern (13) ferromagnetisch ist und das die Rillenstruktur (11) auffüllende Metall (12) nicht ferromagnetisch ist.

11. Positionsmeßsystem für einen Hydraulikzylinder nach Anspruch 1, wobei der metallische Kern (13) aus Stahl besteht.

12. Positionsmeßsystem für einen Hydraulikzylinder nach Anspruch 1, wobei das die Rillenstruktur (11) auffüllende Metall (12) Chrom umfasst.

13. Positionsmeßsystem für einen Hydraulikzylinder nach Anspruch 1, wobei das die Rillenstruktur (11) auffüllende Metall (12) eine nicht-ferromagnetische Nikkellegierung umfasst.

14. Positionsmeßsystem für einen Hydraulikzylinder nach Anspruch 13, wobei die nicht-ferromagnetische Nickellegierung einen Phosphoranteil von mehr als 10,5 % umfasst.

15. Positionsmeßsystem für einen Hydraulikzylinder nach Anspruch 1 oder 12, wobei sich zwischen dem metallischen Kern (13) und dem die Rillenstruktur auffüllenden Metall (12) eine mittlere Metallschicht (14) befindet.

16. Positionsmeßsystem für einen Hydraulikzylinder nach Anspruch 15, wobei die mittlere Metallschicht (14) Nickel umfasst.

17. Positionsmeßsystem für einen Hydraulikzylinder nach Anspruch 1, wobei das die Rillenstruktur auffüllende Metall (12) eine glatte Oberfläche (17, 18) aufweist.

18. Positionsmeßsystem für einen Hydraulikzylinder nach Anspruch 1 oder 17, wobei sich auf dem die Rillenstruktur auffüllenden Metall (12) eine äußere Metallschicht (19) befindet.

19. Positionsmeßsystem für einen Hydraulikzylinder nach Anspruch 18, wobei die äußere Metallschicht (19) Chrom umfasst.

20. Positionsmeßsystem für einen Hydraulikzylinder nach Anspruch 4, wobei die Tiefe der Rillen (16) gegenüber den Erhebungen (15) circa 200 *µ*m beträgt.

21. Positionsmeßsystem für einen Hydraulikzylinder nach Anspruch 4, wobei das die Rillenstruktur (11) auffüllende Metall (12) über den Rillen (16) eine Dicke von mehr als 200 *µ*m aufweist.

22. Positionsmeßsystem für einen Hydraulikzylinder nach Anspruch 4, wobei das die Rillenstruktur (11) auffüllende Metall (12) über den Erhebungen (15) eine Dicke von circa 50 µm aufweist.

23. Positionsmeßsystem für einen Hydraulikzylinder nach Anspruch 15 oder 16, wobei die mittlere Metallschicht (14) eine Dicke weniger als 50 µm aufweist.

24. Positionsmeßsystem für einen Hydraulikzylinder nach Anspruch 18 oder 19, wobei die äußere Metallschicht (19) eine Dicke von circa 50 µm aufweist.

25. Positionsmeßsystem für einen Hydraulikzylinder nach Anspruch 15 oder 16, wobei die mittlere Metallschicht (14) stromlos oder galvanisch auf dem metallischen Kern (13) aufgebracht ist.

26. Positionsmeßsystem für einen Hydraulikzylinder nach Anspruch 1, wobei das die Rillenstruktur (11) auffüllende Metall (12) stromlos oder galvanisch aufgebracht und zu einer glatten Oberfläche (17, 18) geschliffen ist.

27. Positionsmeßsystem für einen Hydraulikzylinder nach Anspruch 26, wobei das Aufbringen des die Rillenstruktur (11) auffüllenden Metalls (12) ein Multilagenverfahren umfasst, so dass das die Rillenstruktur (11) auffüllende Metall (12) mehrere nacheinander aufgebrachte Schichten von weniger als 50µm Dicke umfasst.

28. Positionsmeßsystem für einen Hydraulikzylinder nach Anspruch 18 oder 19, wobei die äußere Metallschicht (19) stromlos oder galvanisch aufgebracht ist.

29. Positionsmeßsystem für einen Hydraulikzylinder nach Anspruch 1, wobei es sich bei dem mindestens einen Sensor (30, 40) um einen magnetoresistiven Sensor oder einen GMR (Giant-Magneto-Resistant) Sensor handelt.

30. Positionsmeßsystem für einen Hydraulikzylinder nach Anspruch 29, wobei der Sensor aus mehreren magnetoresistiven oder GMR - Widerstandsstrukturen (31, 41) aufgebaut ist.

31. Positionsmeßsystem für einen Hydraulikzylinder nach Anspruch 30, wobei die magnetoresistiven oder GMR - Widerstandsstrukturen (31, 41) in zwei Brükkenschaltungen, der Sinus- und der Cosinusschaltung, angeordnet sind.

32. Positionsmeßsystem für einen Hydraulikzylinder nach Anspruch 30, wobei der Abstand der magnetoresistiven oder GMR - Widerstandsstrukturen (31, 41) einer Periodenlänge der Rillenstruktur (11) angepaßt ist.

33. Positionsmeßsystem für einen Hydraulikzylinder nach Anspruch 31, wobei von dem Sensor (30, 40) abgegebene Signale über ihr Quadratursignal ausgewertet werden.

34. Positionsmeßsystem für einen Hydraulikzylinder nach Anspruch 31, wobei eine Analyse der Phasenbeziehung der Signale aus der Sinus- und Cosinusschaltung eine Aussage über die Richtung liefert.

35. Positionsmeßsystem für einen Hydraulikzylinder nach Anspruch 31, wobei eine Quotientenbildung der Signale aus der Sinus- und Cosinusschaltung die Genauigkeit einer Positionsanalyse erhöht.

36. Positionsmeßsystem für einen Hydraulikzylinder nach Anspruch 1, mit zwei Sensoren (30, 40), welche in axialer Richtung einen festen Abstand aufweisen.

37. Positionsmeßsystem für einen Hydraulikzylinder nach Anspruch 36, wobei der Abstand ein Vielfaches und insbesondere ein Zweifaches der Periodenlänge der Rillenstruktur (11) aufweist.

38. Positionsmeßsystem für einen Hydraulikzylinder nach Anspruch 37, wobei aus einem Vergleich der Signale der beiden Sensoren (30,40) die Referenzmarken (1) erkannt werden.

39. Positionsmeßsystem für einen Hydraulikzylinder nach Anspruch 1, welches weiterhin einen Sensorhalter (60) aufweist, der einen Gleitkörper (50), in dem sich die Sensoren (30, 40) befinden, und eine Feder (61) aufweist.

40. Positionsmeßsystem für einen Hydraulikzylinder nach Anspruch 39, wobei der Gleitkörper (50) aus Aluminium besteht.

41. Positionsmeßsystem für einen Hydraulikzylinder nach Anspruch 40, wobei der Gleitkörper (50) eine Beschichtung (51) zur Verminderung der Reibung und zum Verschleißschutz aufweist.

42. Positionsmeßsystem für einen Hydraulikzylinder nach Anspruch 41, wobei die Beschichtung (51) aus einer galvanischen Nickelschicht mit PTFE-Einlagerungen besteht.

43. Positionsmeßsystem für einen Hydraulikzylinder nach Anspruch 39, wobei der Gleitkörper (50) einen Innenradius aufweist, der kleiner ist als der Radius der Kolbenstange (10).

44. Verfahren zur Herstellung einer Kolbenstange des Positionsmeßsystem für einen Hydraulikzylinder nach Anspruch 1, umfassend:
Einschleifen des Rillenmusters (11) in den metallischen Kern (13),
stromloses oder galvanisches Aufbringen mehrerer Schichten des die Rillenstruktur (11) auffüllenden Metalls (12),
Schleifen des die Rillenstruktur (11) auffüllenden Metalls (12) zu einer glatten Oberfläche (17, 18).

45. Verfahren zur Herstellung einer Kolbenstange nach Anspruch 44, wobei vor dem Aufbringen des die Rillenstruktur (11) auffüllenden Metalls (12) noch eine Metallschicht (14) stromlos oder galvanisch aufgebracht wird.

46. Verfahren zur Herstellung einer Kolbenstange nach Anspruch 44, wobei nach dem Abschleifen des die Rillenstruktur (11) auffüllenden Metalls (12) zu einer glatten Oberfläche (18) eine äußere Metallschicht (19) stromlos oder galvanisch aufgebracht wird.
